# EUROPÄISCHE PATENTSCHRIFT

(11) **EP 1 253 035 B1**
(45) Veröffentlichungstag und Bekanntmachung des Hinweises auf die Patenterteilung: **21.09.2005**
(21) Anmeldenummer: 02008946.2
(22) Anmeldetag: 22.04.2002
(51) Int. Cl.: B60J 5/04

(54) **Einschweissrahmen für eine Kraftfahrzeugtür**
Weld-in frame for a motor vehicle door
Cadre soudé pour une porte de véhicule

(30) Priorität: 24.04.2001 DE 10120033
(43) Veröffentlichungstag der Anmeldung: 30.10.2002
(73) Patentinhaber: DURA Automotive Plettenberg Entwicklungs- und Vertriebs GmbH, 58840 Plettenberg (DE)
(72) Erfinder: Bittner, Norfried, 58452 Witten (DE)
(74) Vertreter: Zinnecker, Armin

(56) Entgegenhaltungen:
- DE-A- 4 432 380
- DE-A- 19 942 650
- US-A- 4 984 389
- US-A- 6 119 407

## Beschreibung

Die Erfindung betrifft einen Einschweißrahmen für eine Fahrzeugtür, insbesondere eine Kraftfahrzeugtür, mit einer Schachtleiste, gemäß dem Oberbegrift von Anspruch 1. Die Erfindung betrifft ferner eine Fahrzeugtür, insbesondere eine Kraftfahrzeugtür, die einen Einschweißrahmen und einen Türkasten umfaßt, gemäß dem Oberbegriff von Anspruch 6.

Aus der gattungsgemäßen U.S. 6,119,407 A ist ein Einschweißrahmen für eine Kraftfahrzeugtür bekannt, der eine Schachtleiste mit einer Längsseite und Abwinkelungen umfaßt. Die Abwinkelungen können mit einem Türkasten verschraubt werden, wobei verschweißte Schraubverbindungen verwendet werden können,

Die DE 199 42 650 A offenbart einen Einschweißrahmen für eine Kraftfahrzeugtür mit einem Türmodul, das eine Rahmenstruktur und einen Aggregateträger umfaßt, und einen Türkörper, der mit dem Türmodul mittels Befestigungsschrauben verbunden ist.

Aus der U.S. 4,984,389 ist eine Kraftfahrzeugtür bekannt, die einen Einschweißrahmen umfaßt, der mit einem Türkasten verbunden ist.

Aufgabe der Erfindung ist es, bei einem Einschweißrahmen und einer Fahrzeugtür der eingangs genannten Art eine Verbesserung der Steifigkeit zu erreichen.

Erfindungsgemäß wird diese Aufgabe bei einem Einschweißrahmen der eingangs angegebenen Art durch die Merkmale des Anspruchs 1 gelöst. Die Lösung der Aufgabe erfolgt bei einer Fahrzeugtür der eingangs genannten Art durch die Merkmale des Anspruchs 6. Die Schachtleiste des Einschweißrahmens umfaßt eine Längsseite und Abwinkelungen, die mit einem Türkasten an den Enden der Längsseite und an den Abwinkelungen verschweißt ist. Die erfindungsgemäße Fahrzeugtür, insbesondere Kraftfahrzeugtür, ist gekennzeichnet durch einen erfindungsgemäßen Einschweißrahmen und einen Türkasten, der mit der Schachtleiste an den Enden der Längsseite und an den Abwinkelungen verschweißt ist. Der Türkasten ist mit den Abwinkelungen der Schachtleiste und mit der Längsseite der Schachtleiste in deren Endbereichen, an die sich die Abwinkelungen anschließen, verschweißt. Hierdurch kann insbesondere eine deutliche Verbesserung der Steifigkeit erreicht werden. Vorteilhafte Weiterbildungen der Erfindung sind Gegenstand der Unteransprüche.

Die Abwinkelungen können mit der Schachtleiste einstückig sein. Insbesondere können die Abwinkelungen der Schachtleiste durch Abkantungen gebildet sein, also dadurch, daß die Schachtleiste abgekantet wird.

Es ist allerdings auch möglich, die Schachtleiste mehrstückig auszubilden.

Eine weitere vorteilhafte Weiterbildung ist dadurch gekennzeichnet, daß die Schachtleiste ein Spiegelblech umfaßt. Das Spiegelblech kann zur Befestigung eines Außenspiegels dienen. Es ist vorzugsweise mit der Schachtleiste verschweißt. Es kann allerdings auch mit der Schachtleiste einstückig sein.

Nach einer vorteilhaften Weiterbildung wird eine Abwinkelung von einem Teil des Spiegelblechs gebildet. In diesem Fall ist der Türkasten vorzugsweise mit dem die Abwinkelung bildenden Teil des Spiegelblechs verschweißbar bzw. verschweißt. Die Anordnung kann derart getroffen sein, daß derjenige Teil der Schachtleiste, der mit dem Türkasten verschweißbar oder verschweißt ist, von einem Teil des Spiegelblechs gebildet wird.

Nach einer weiteren vorteilhaften Weiterbildung ist die Schachtleiste mit einem Rahmenteil verbunden. Die Verbindung erfolgt vorzugsweise durch Verschweißen. Die-Schachtleiste kann mit einem hinteren Rahmenteil verbunden, insbesondere verschweißt sein. Stattdessen oder zusätzlich kann sie auch mit einem Spiegelblech und/oder einem Teil im Bereich des Spiegelblechs verbunden, insbesondere verschweißt sein.

Ausführungsbeispiele der Erfindung werden nachstehend anhand der beigefügten Zeichnung im einzelnen erläutert. In der Zeichnung zeigt
- Fig. 1: eine Kraftfahrzeugtür in einer Seitenansicht,
- Fig. 2: die Kraftfahrzeugtür gemäß Fig. 1 in einer Ansicht von oben,
- Fig. 3: die Kraftfahrzeugtür gemäß Fig. 1 und 2 in einer Ansicht von hinten,
- Fig. 4: einen Einschweißrahmen einer Kraftfahrzeugtür vor der Zusam- mensetzung in einer perspektivischen Seitenansicht,
- Fig. 5: den Einschweißrahmen gemäß Fig. 4 im zusammengesetzten Zu- stand und einen Türkasten einer Kraftfahrzeugtür in einer perspek- tivischen Seitenansicht,
- Fig. 6: die Kraftfahrzeugtür gemäß Fig. 5 im zusammengesetzten Zustand in einer Seitenansicht,
- Fig. 7: die Kraftfahrzeugtür gemäß Fig. 6 in einer Ansicht von hinten,
- Fig. 8: die Kraftfahrzeugtür gemäß Fig. 6 und 7 in einer Ansicht von oben,
- Fig. 9: eine abgewandelte Ausführungsform mit einem Spiegelblech in ei- ner Seitenansicht und
- Fig. 10: eine weitere abgewandelte Ausführungsform mit einem Spiegel- blech in einer Seitenansicht.

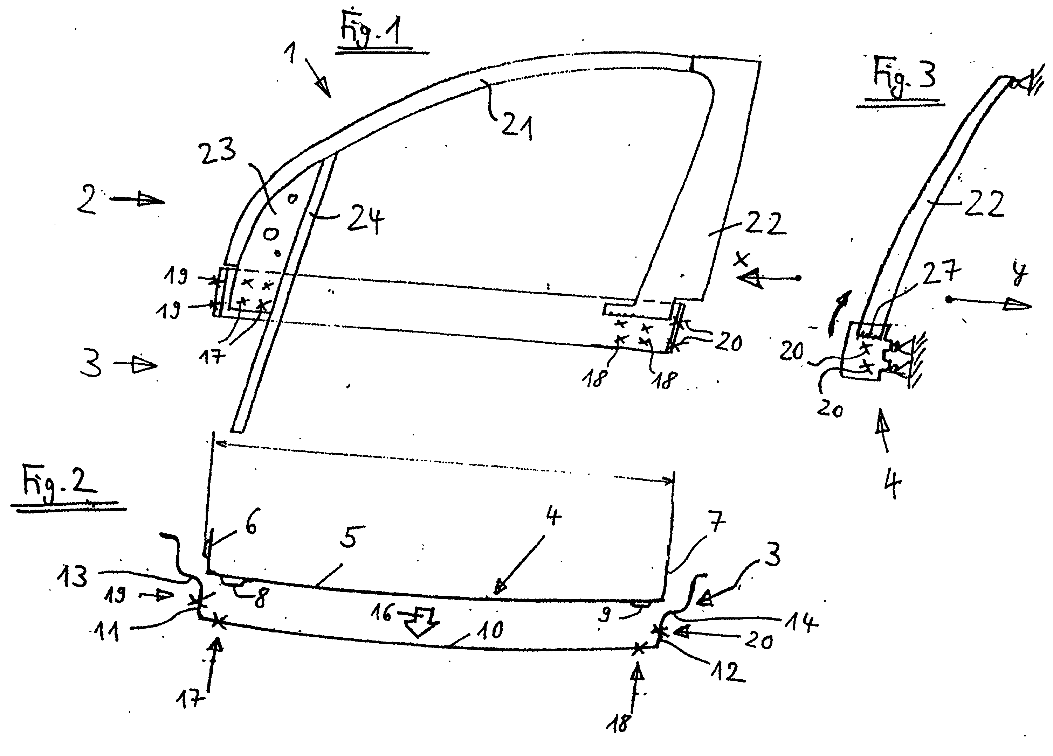

Die insgesamt mit 1 bezeichnete Kraftfahrzeugtür besteht im wesentlichen aus einem Einschweißrahmen 2 und einem Türkasten 3, die miteinander verschweißt sind. Der in den Figuren 1 bis 3 gezeigte Einschweißrahmen 2, der auch als Türrahmen bezeichnet werden kann, umfaßt eine Schachtleiste 4, die aus einer Längsseite 5 und an deren Enden vorgesehenen Abkantungen 6, 7 besteht. Die Längsseite 5 ist in der aus Fig. 2 ersichtlichen Weise geringfügig gebogen. Die Abkantungen 6, 7 weisen von der Längsseite 5 in einem im wesentlichen rechten Winkel nach innen. An den Enden der Längsseite 5 sind Schweißaufnahmen 8, 9 vorgesehen, die aus abgekröpften Blechen bestehen. Ähnliche Schweißaufnahmen können an einer oder beiden Außenseiten der Abkantungen 6, 7 vorgesehen sein.

Der Türkasten 3 besteht ebenfalls aus einer Längsseite 10, die - ähnlich wie die Längsseite 5 der Schachtleiste 4 - geringfügig nach außen gebogen ist, wie insbesondere aus den Figuren 2 und 8 ersichtlich. An den Enden sind in einem Winkel von im wesentlichen 90° nach innen weisende Abkantungen 11, 12 vorgesehen, an die sich weitere, im wesentlichen parallel zur Längsseite 10 nach außen verlaufende Abkantungen 13, 14 anschließen. An den Enden dieser Abkantungen 13, 14 befinden sich weitere, in einem Winkel von etwa 90° nach innen weisende Abkantungen, an die sich weitere Profile anschließen können.

In Fig. 2 sind die Schachtleiste 4 und der Türkasten 3 in einer noch nicht zusammengefügten Stellung gezeigt. Die Schachtleiste 4 wird in Richtung des Pfeils 16 auf den Türkasten 3 zu bewegt, bis die äußeren Enden der Längsseite 10 des Türkastens 3 auf den Schweißaufnahmen 8, 9 aufliegen. In dieser Stellung können die äußeren Bereiche der Längsseite 10 des Türkastens 3 an den Schweißpunkten 17, 18 mit den Schweißaufnahmen 8, 9 verschweißt werden (y-Schweißung). Ferner werden in dieser Stellung die Abkantungen 11, 12 des Türkastens 15 mit den Abkantungen 6, 7 der Schachtleiste 4 bzw. den dort vorgesehenen Schweißaufnahmen an den Schweißpunkten 19, 20 verschweißt (x-Schweißung).

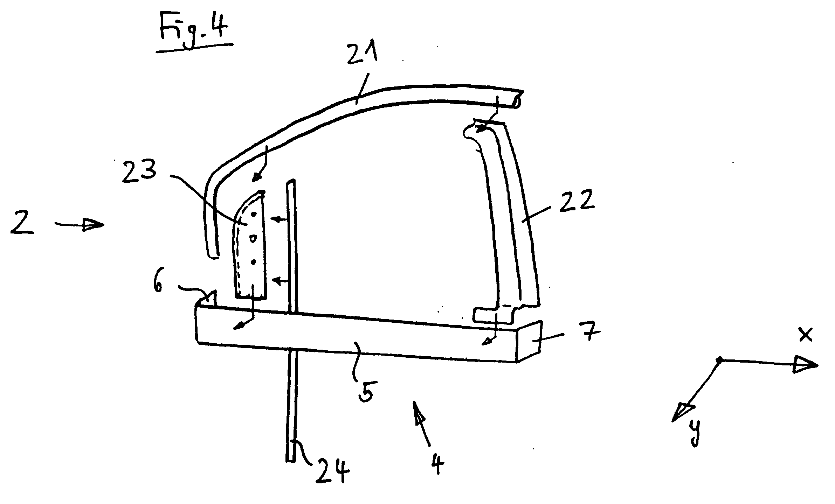

Wie aus Fig. 1 ersichtlich sind an jedem Ende der Längsseite 10 des Türkastens 3 jeweils vier im wesentlichen im Viereck bzw. Quadrat angeordnete Schweißpunkte 17 bzw. 18 vorgesehen. Es können allerdings auch mehr oder weniger Schweißpunkte vorhanden sein, die auch in anderer Weise angeordnet werden können. Ferner sind, wie aus Fig. 1 und Fig. 3 ersichtlich, jeweils zwei übereinander liegende Schweißpunkte 19 und 20 vorgesehen. Auch hier können mehr oder weniger Schweißpunkte vorgesehen sein, die in einer anderen Weise angeordnet werden können.

Der in Fig. 4 im noch nicht zusammengesetzten Zustand gezeigte Einschweißrahmen 2 umfaßt die Schachtleiste 4, einen oberen Rahmenteil 21, einen hinteren Rahmenteil 22, ein Spiegelblech 23 und eine Führungsleiste 24. Die Schachtleiste 4 besteht aus einer Längsseite 5 und an deren Enden vorgesehenen Abwinkelungen 6, 7, die als Abkantungen ausgestaltet, also von der Längsseite 5 abgekantet sind.

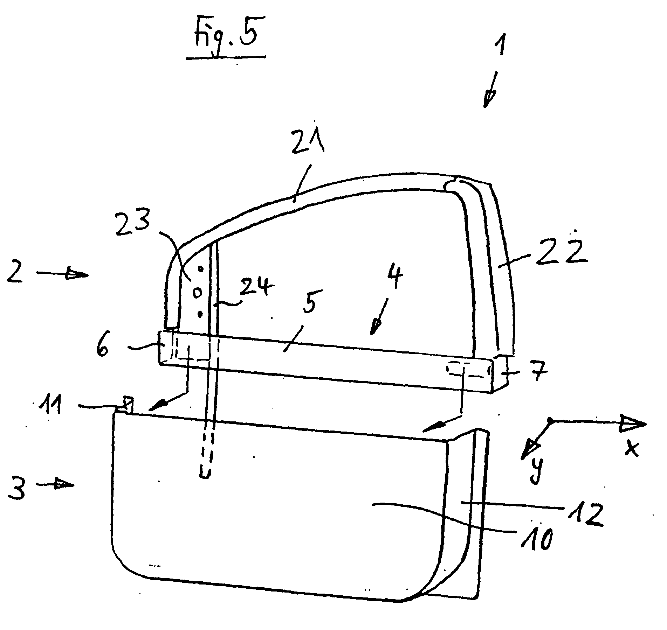

Fig. 5 zeigt den Einschweißrahmen 2 im zusammengesetzten Zustand. Die Führungsleiste 24 ist mit dem Spiegelblech 23 verbunden, welches mit dem oberen Rahmenteil 21 verbunden ist. Das hintere Ende des oberen Rahmenteils 21 ist mit dem oberen Ende des hinteren Rahmenteils 22 verbunden. Das Spiegelblech 23 und das untere Ende des hinteren Rahmenteils 22 sind, wie durch die Pfeile in Fig. 4 angedeutet, mit den inneren Endbereichen der Längsseite 5 der Schachtleiste 4 verbunden. Die Verbindungen erfolgen vorzugsweise durch Verschweißung.

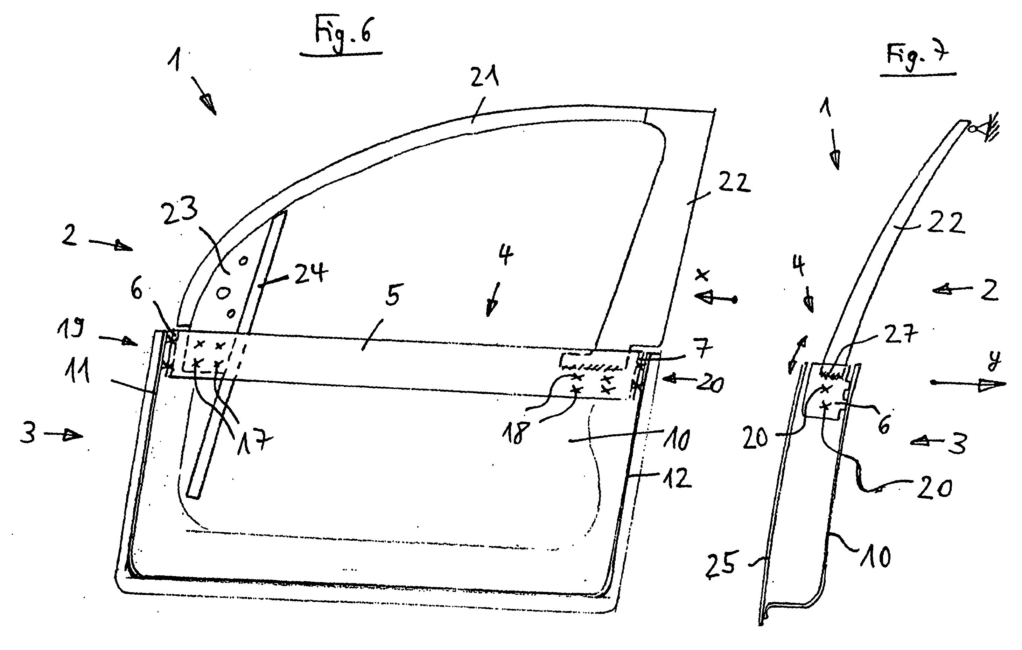

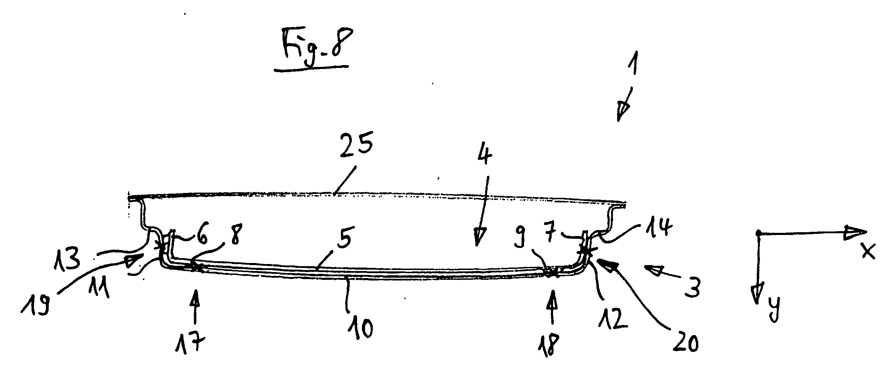

Der Einschweißrahmen 2 wird, wie in Fig. 5 und die dortigen Pfeile dargestellt, mit dem Türkasten 3 verbunden, nämlich verschweißt. Hierdurch wird der in Fig. 6, 7 und 8 gezeigte Zustand erreicht. In x-Richtung erfolgt die Verschweißung durch die Schweißpunkte 19 und/oder 20. Wenn sowohl die Schweißpunkte 19 als auch die Schweißpunkte 20 vorhanden sind, wenn also der Einschweißrahmen 2 an beiden Enden mit dem Türkasten 3 verschweißt ist, wird eine hohe Stabilität erreicht. In bestimmten Fällen kann es allerdings vorteilhaft sein, wenn nur die Schweißpunkte 19 oder 20 vorhanden sind. Dann ergibt sich der weitere Vorteil, daß im Bereich der ansonsten vorgesehenen weiteren Schweißpunkte 20 bzw. 19 ein Toleranzausgleich in x-Richtung erfolgen kann. Die Verschweißung in y-Richtung erfolgt durch die Schweißpunkte 17, 18. Der Türkasten 3 wird auf seiner Außenseite durch ein Außenblech 25 geschlossen, das zur Fahrzeug-Außenseite hin geringfügig gekrümmt ist, wie aus den Figuren 7 und 8 ersichtlich.

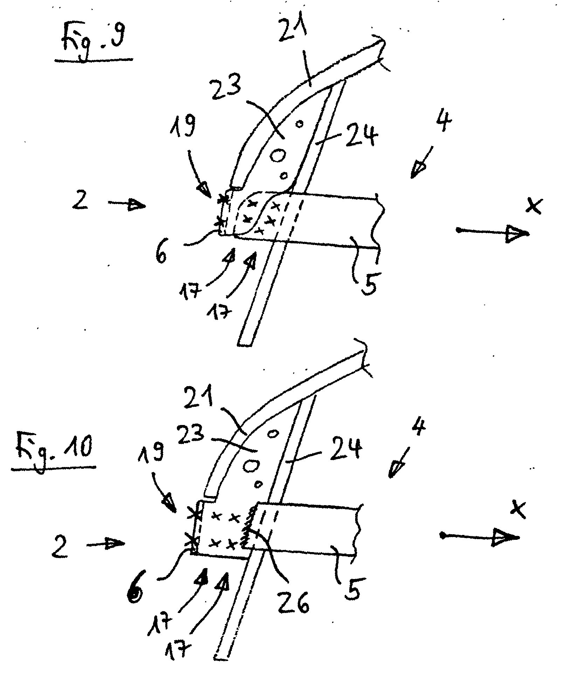

Bei den Ausführungsformen, die in den Figuren 1 bis 8 gezeigt sind, ist der Türkasten 3 mit der Schachtleiste 4 in den Endbereichen von deren Längsseite 5 verschweißt, nämlich durch die Schweißpunkte 17, 18, und ist der Türkasten 3 mit den Abwinkelungen 6, 7, die als Abkantungen ausgestaltet sind, verschweißt, nämlich durch die Schweißpunkte 19 und/oder 20. Bei der in Fig. 9 gezeigten Abwandlung wird eine Abwinkelung, nämlich die Abwinkelung 6, von einem Teil des Spiegelblechs 23 gebildet. Das Spiegelblech 23 weist in seinem unteren Bereich eine im wesentlichen rechtwinkelige Abkantung auf, die die Abwinkelung 6 bildet. Die Verschweißung mit dem Türkasten 3 erfolgt durch die Schweißpunkte 19, die auf dieser Abwinkelung 6 vorgesehen sind, und durch die Schweißpunkte 17, die sowohl im Endbereich der Längsseite 5 der Schachtleiste 4 als auch im unteren Bereich des Spiegelblechs 3 vorgesehen sind.

Bei der Abwandlung nach Fig. 10 ist die Längsseite 5 der Schachtleiste 4 durch eine Schweißnaht 26 mit dem unteren Bereich des Spiegelblechs 23 verbunden. Alle Schweißpunkte 17 befinden sich im unteren Bereich des Spiegelblechs 23.

Durch die Erfindung wird der Vorteil erreicht, daß der Einschweißrahmen 2 in zwei Richtungen (x-Richtung und y-Richtung) mit dem Türkasten 3 verschweißt werden kann. Hierdurch kann eine deutliche Verbesserung der Steifigkeit erreicht werden. Durch die Erfindung wird ein Einschweißrahmen 2 mit abgewinkelter Schachtleiste 4 und Ausgleichsmöglichkeit in y-Richtung geschaffen. Die Abwinkelungen 6, 7 der Schachtleiste 4 können durch Abkantungen gebildet werden, so daß sie mit der Schachtleiste 4 einstückig sind. Sie können allerdings auch von anderen Bauteilen gebildet werden, insbesondere von einem Teil eines Spiegelblechs 23.

Durch die Ausgleichsmöglichkeit in y-Richtung kann der Einschweißrahmen 2 sehr formgenau herstellt werden. Dies in Fig. 3 dargestellt. Der hintere Rahmenteil 22, der auch als B-Säule bezeichnet wird, wird mit der Schachtleiste 4 durch eine horizontale Schweißnaht 27 verbunden. Bei der Herstellung des Einschweißrahmens 2 wird der hintere Rahmenteil 22 im oberen Bereich eingespannt. Die Schachtleiste 4 wird ebenfalls in einer Herstellungsvorrichtung eingespannt. Beide Teile werden richtig zueinander positioniert und dann durch die horizontale Schweißnaht 27 miteinander verbunden. Dabei können Toleranzen in der y-Richtung ausgeglichen werden. In analoger Weise kann ein entsprechender Ausgleich im Bereich des Spiegelblechs 23 erfolgen.

## Patentansprüche

1. Einschweißrahmen für eine Fahrzeugtür, insbesondere eine Kraftfahrzeugtür (1), mit einer Schachtleiste (4), die eine Längsseite (5) und Abwinkelungen (6, 7) umfaßt und die mit einem Türkasten (3) an den Enden der Längsseite (5) und an den Abwickelungen (6, 7) verschweißt (17, 18; 19, 20) ist.

2. Einschweißrahmen nach Anspruch 1, **dadurch gekennzeichnet, daß** die Abwinkelungen (6, 7) mit der Schachtleiste (4) einstückig sind.

3. Einschweißrahmen nach Anspruch 1 oder 2, **dadurch gekennzeichnet, daß** die Schachtleiste (4) ein Spiegelblech (23) umfaßt.

4. Einschweißrahmen nach Anspruch 3, **dadurch gekennzeichnet, daß** eine Abwinkelung von einem Teil des Spiegelblechs (23) gebildet wird.

5. Einschweißrahmen nach einem der vorhergehenden Ansprüche, **dadurch gekennzeichnet, daß** die Schachtleiste (4) mit einem Rahmenteil, insbesondere dem hinteren Rahmenteil (22) und/oder dem Spiegelblech (23) verbunden, insbesondere verschweißt (27) ist.

6. Fahrzeugtür, insbesondere Kraftfahrzeugtür, **gekennzeichnet durch** einen Einschweißrahmen (2) nach einem der Ansprüche 1 bis 5 und **durch** einen Türkasten (3), der mit der Schachtleiste (4) an den Enden der Längsseite (5) und an den Abwinkelungen (6, 7) verschweißt ist.

## Claims

1. Weld-in frame for a vehicle door, in particular a motor vehicle door (1), having a channel strip (4) which comprises a longitudinal side (5) and angled-off portions (6, 7) and which is welded (17, 18; 19, 20) to a door box (3) at the ends of the longitudinal side (5) and at the angled-off portions (6, 7).

2. Weld-in frame according to Claim 1, **characterized in that** the angled-off portions (6, 7) are in one piece with the channel strip (4).

3. Weld-in frame according to Claim 1 or 2, **characterized in that** the channel strip (4) comprises a mirror plate (23).

4. Weld-in frame according to Claim 3, **characterized in that** one angled-off portion is formed by part of the mirror plate (23).

5. Weld-in frame according to one of the preceding claims, **characterized in that** the channel strip (4) is connected, in particular welded (27), to a frame part, in particular the rear frame part (22) and/or the mirror plate (23).

6. Vehicle door, in particular motor vehicle door, **characterized by** a weld-in frame (2) according to one of Claims 1 to 5 and by a door box (3) which is welded to the channel strip (4) at the ends of the longitudinal side (5) and at the angled-off portions (6, 7).

## Revendications

1. Cadre soudé pour une porte de véhicule, en particulier une porte de véhicule automobile (1), avec une baguette formant cage (4), qui comprend un côté longitudinal (5) et des coudages (6,7) et qui est assemblée par soudage (17, 18; 19, 20) avec un caisson de porte (3) aux extrémités du côté longitudinal (5) et aux coudages (6,7).

2. Cadre soudé selon la revendication 1, **caractérisé en ce que** les coudages (6,7) sont réalisés en une pièce avec la baguette formant cage (4).

3. Cadre soudé selon la revendication 1 ou 2, **caractérisé en ce que** la baguette formant cage (4) comprend une tôle miroir (23).

4. Cadre soudé selon la revendication 3, **caractérisé en ce qu'**un coudage est formé par une partie de la tôle miroir (23).

5. Cadre soudé selon l'une des revendications précédentes, **caractérisé en ce que** la baguette formant cage (4) est reliée, en particulier par soudage (27) à une partie de châssis, en particulier la partie de châssis arrière (22) et/ou la tôle miroir (23).

6. Porte de véhicule, en particulier porte de véhicule automobile, **caractérisée par** un cadre soudé (2) selon l'une des revendications 1 à 5 et par un caisson de porte (3) qui est assemblé par soudage avec la baguette formant cage (4) aux extrémités du côté longitudinal (5) et aux coudages (6, 7).
